# EUROPEAN PATENT SPECIFICATION

(11) **EP 0 542 547 B1**
(45) Date of publication and mention of the grant of the patent: **12.02.1997**
(21) Application number: 92310345.1
(22) Date of filing: 12.11.1992
(51) Int. Cl.: F02M 37/22, B01D 35/027

(54) **Fuel tank filter**
Filter für Kraftstoffbehälter
Filtration pour réservoir de carburant

(30) Priority: 12.11.1991 US 791495
(43) Date of publication of application: 19.05.1993
(73) Proprietor: FILTERTEK, INC., Hebron Illinois 60034 (US)
(72) Inventor: Cain, Thomas A., Woodstock, Illinois 60098 (US); Myers, Pim, NL-5913 TP Venlo (NL)
(74) Representative: Brose, D. Karl

(56) References cited:
- US-A- 4 743 370
- US-A- 4 874 510
- US-A- 5 049 271

## Description

### BACKGROUND OF THE INVENTION

The present invention relates to improved fuel tank filters, and more particularly to filters for use in a fuel tank where the fuel pump is housed inside the fuel tank and the fuel level occasionally falls below the bottom of the fuel pump.

With the introduction of motor vehicles with fuel injected engines, it has become necessary to locate fuel pumps inside fuel tanks. Because the fuel system is a closed system, the pump is typically fixed to the top of the tank to simplify sealing holes in the tank through which connections to fuel lines, electrical power and control wires, and the like are made for the fuel pump.

At present, with metal fuel tanks, the fuel pump inlet and filter thereon remain submerged at the bottom of the fuel tank. The pump is typically designed to have a bottom inlet about 1.27 cm above the bottom of the tank. The rigidity of the metal tank assures that the 1.27 cm spacing changes very little. Moreover, the filters are designed to provide a "wicking" action so that vapor will not enter the fuel pump inlet at infrequent times when the fuel level drops below the bottom of the pump inlet, such as during vehicle turning, stopping, or hill climbing maneuvers.

There is a current desire to change from metal fuel tanks to plastic fuel tanks, however. These tanks are less rigid, and due to thermal contraction or expansion, the distance between the top and bottom of the tanks is known to vary by as much as 2.54 cm. Due to the typical fixture of the pump to the top of the fuel tank, an increase of 2.54 cm in the distance between the top and bottom of the tank results in the bottom of the fuel pump inlet sometimes being more than 2.54 cm from the bottom of the tank. If the fuel depth in the tank is low at the same time the tank has expanded, the bottom of the fuel pump inlet may be too far above the level of the fuel for even the wicking action of the filter material to provide liquid fuel to the pump inlet.

The fact that the bottom of the tank moves up and down, coupled with the requirement that liquid fuel always be available at the pump inlet, presents a problem. One attempted solution to this problem has been to use a fuel tank filter with an envelope of filtration material and an internal plastic separator. The separator is flexible, and biased so that it holds the filter envelope on the bottom of the tank. While this concept appears sound, the filters manufactured according to this design have not solved the problem. Specifically, tests conducted in developing the present invention show that the plastic used to construct the separator loses its flexibility after exposure to gasoline containing alcohol.

This problem has been solved for some filter designs by a separator which incorporates a metal leaf spring that biases the separator and holds the envelope toward the bottom of the fuel tank, which is described in U.S. Patent No. 5,049,271 and is incorporated herein by reference. It can be appreciated that this construction may not serve for all filter designs.

Moreover, filters biased toward the fuel tank bottom also have developed a problem due to friction at the contact points on the filter that are between the separating means and tank bottom from typical motor vehicle vibrations. This friction results in excessive wear on the filter with a concomitant decrease in filtration efficiency, and may also jeopardize the integrity of the filter material.

The US-A-4,874,510 is describing a filter construction to be mounted on the suction pipe inserted into a gasoline tank of an automobile or the like. This known fuel tank filter is having a connector, which inside a fuel tank is connected to the suction side of a fuel delivery system, wherein the filter is consisting of a filtration material, forming an envelope and being fixed to the connector and a spring member being effective between the connector in the lower part of the envelope, to prevent substential collapse of said envelope and to form a cavity of the filter fuel. The spring member being active as a shape retaining means for the envelope further insures due to its elasticity that the filter thanks to the deformability of the envelope will function normally and satisfactually even if its pressed against the tank bottom when installed.

On the basis of this known construction, the present invention intends to solve a problem, especially connected with plastic filter tanks, in that the filter according to the invention should accomodate for the substantial possible movement of the bottom of such tanks while maintaining the easy manufacturability and while guarantying a long service life of such filters inspite of such movements.

### SUMMARY OF THE INVENTION

It has now been found that this task is solved by a fuel tank filter having a connector which inside a fuel tank is connected to the suction side of a fuel delivery system, wherein the filter is consisting of a filtration material forming an envelope and being fixed to said connector and a spring member being effective between said connector and a lower part of the envelope to prevent substantial collapse of said envelope and to form a cavity for the filtered fuel, characterized in that the connector is connected to the inlet of a fuel pump mounted inside the fuel tank, that the spring member is a metal wire spring which is formed in a manner such that the lower part of said envelope is biased against the bottom of said fuel tank to follow possible vertical movement of the bottom in that a wear pad is provided on the inside of said envelope slideably engaging the free end of said spring preventing contact between the spring and the filtration material, and in that said wear pad is affixed to the filtration material to allow for relative movement between said free end of the spring and said wear pad.

Further details of preferred embodiments according to the invention are subject of the subclaims 2 to 13. The fuel tank filters of the present invention reliably accomodate the relative movement of the fuel tank bottom over prolonged periods of exposure to alcohol-blended gasolines, thereby assuring the presence of liquid fuel at the pump inlet.

The foregoing features and advantages of this invention will be further understood upon consideration of the following detailed description of embodiments of the invention taken in conjunction with the accompanying drawings, in which:

### BRIEF DESCRIPTION OF THE DRAWINGS

FIG. 1 is a perspective view of a fuel filter of one embodiment of the present invention, partly broken away.

FIG. 2 is a cross-sectional view taken along line 2-2 of FIG. 1.

FIG. 3 is a partial top-plan view taken along line 3-3 of FIG. 2.

FIG. 4 is an exploded cross-sectional view of the connector of FIG. 3 taken along line 4-4 of FIG. 3.

FIG. 5 is a cross-sectional view taken along line 5-5 of FIG. 3.

FIG. 6 is a cross-sectional view taken along line 6-6 of FIG. 3.

FIG. 7 is a top plan view of the spring of FIGs. 1 and 2.

FIG. 8 is a side view of the spring of FIG. 7.

FIG. 9 is a cross-sectional view like FIG. 2 of another embodiment of the filter of the present invention.

FIG. 10 is a cross-sectional view of the connector of FIG. 9 taken along line 9-9 of FIG. 10.

### DETAILED DESCRIPTION OF THE DRAWINGS AND PREFERRED EMBODIMENTS OF THE INVENTION

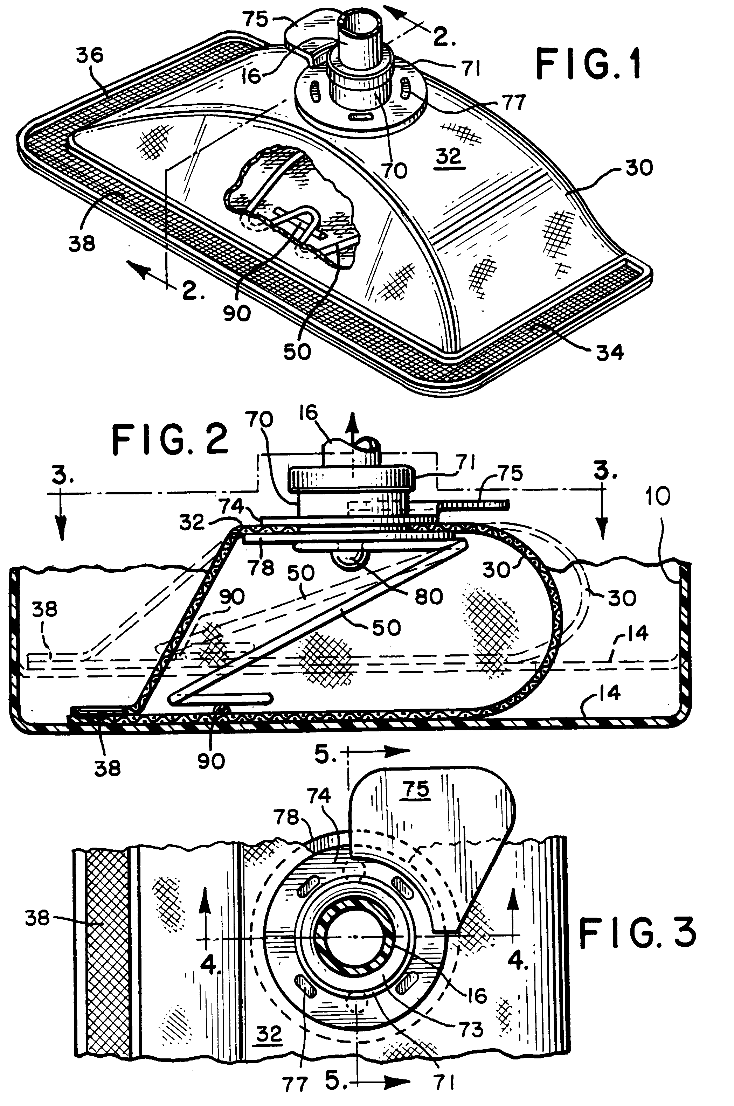

As shown in FIGS. 1 and 2, the filter 20 of the present invention is for use in a fuel tank 10. Also enclosed in the fuel tank 10 is a fuel pump inlet 16, and a fuel pump connected by wires, fuel lines, and bracketed to the top of tank 10 (all of which are conventional and none of which are shown). As discussed above, the present invention is designed for occasions where the bottom 14 of fuel tank 10, for one reason or another, moves up and down with respect to fuel pump inlet 16. As previously discussed, this commonly occurs when fuel tank 10 is comprised of plastic or some other material with a relatively high coefficient of expansion, and a pump is fixed to the top of fuel tank 10.

As shown in FIG. 1, filter 20 attaches to inlet 16 and includes a filtration material envelope 30, a generally double z-shaped spring 50, and a plastic connector element 70. The spring 50 separates the walls of envelope 30, and thereby holds envelope 30 open to improve fuel flow through the envelope 30, and biases the bottom of envelope 30 toward tank bottom 14. The envelope 30 is preferably composed of a nylon screen material 32. The screen material 32 is welded closed by latitudinal welds 34, 36 and longitudinal weld 38 to form the envelope shape.

Connector 70, as shown in FIGs. 3-6, is preferably of a two-piece construction, and is sealed to envelope 30 by the placement of filter screen 32 between top element 72 and bottom element 76 at top shoulder 74 and bottom shoulder 78. Integral with top shoulder 74 is reference flange 75 dimensioned to slide into a reference slot on a member (which is conventional and not shown) affixed either to the fuel pump or inlet 16 to secure filter 20 to inlet 16. Top shoulder 74 is also provided with reference slots 77, spaced 90° apart, for engagement with a pin or tongue (which is conventional and not shown) extending from the bottom of the fuel pump to further align filter 20. Also, a hole may be placed in flange 75 to allow a similar pin to be used to secure filter 20 to the pump by means of a conventional fastener, such as a lock washer and nut, located at the end of the pin. Integral with bottom shoulder 78 are diametrically opposed positioning plugs 80, each with retaining ridges 82 extending outwardly from the plug surface to define channels 84. Also integral with bottom shoulder 78 and dimensioned to tightly fit about the outer diameter of inlet 16 is fitting 73. Heat-staked to the end of fitting 73 is swell band 71, preferably of stainless steel, to assure a snug fit between inlet 16 and fitting 73.

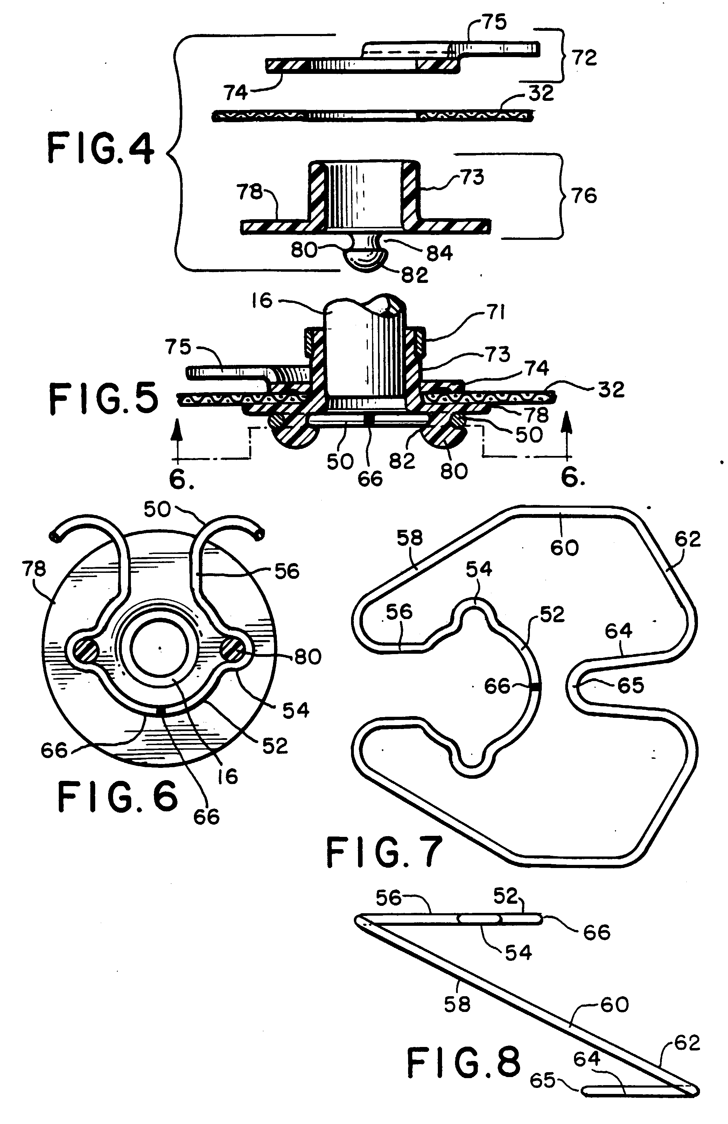

A spring 50 is located within envelope 30, and is best seen in FIGs. 7 and 8. The spring 50 has a bilateral symmetric and is preferably in a double z-shaped configuration in the static state when viewed from a plane normal to the top and base legs. In the preferred embodiment, the spring is composed of a continuous piece of wire with top legs comprised of top runs 52 of a radius greater than the inner radius of fitting 72, positioning runs 54 of a radius to snap fit into channels 84, and clearance runs 56 extending beyond bottom shoulder 78; side legs comprised of outward runs 58, runs 60 parallel to the spring axis of symmetric and inward runs 62; and base legs comprised of inward runs 64 with hairpin curve 65.

Spring 50 is located on connector 70 by snap fitting the positioning runs 54 around the positioning plugs 80 in channels 84 and thus the top leg of spring 50 bears against bottom shoulder 78 of bottom element 76. Screen material 32 is preferably secured between shoulders 74, 78, and top and bottom elements 72, 76 are preferably secured together, by sonic welding. Screen material 32 is wrapped around the joints between the top and side legs of spring 50 and meets other screen material at welds 34, 36, and 38, all preferably sonically welded, to form envelope 30.

Located inside of envelope 30 is wear pad 90, which is affixed to filter material 32, preferably by sonic welding, at a point that prevents spring 50 from contacting filter material 32. In the preferred embodiment, wear pad 90 is located at about mid-length along inward runs 64 of the base leg of spring 50.

The spring 50 is preferably in a z-shaped configuration in its static state, and will tend to pull the filter 20 into the shape shown in FIG. 2. When the fuel tank bottom 14 alters its height, as depicted in phantom lines in FIG. 2, tank bottom 14 interacts with spring 50 via wear pad 90 and pushes up on filter 20, causing the side leg of spring 50 to become more parallel with tank bottom 14 so that the filter 20 takes the shape shown in phantom in FIG. 2. It is also to be noted that the base leg of spring 50 advances on wear pad 90, yet fails to contact filter material 32 thereby avoiding direct sliding by spring 50 on filter screen 32 which affects filtration efficiency or may jeopardize filter integrity. When the tank bottom 14 drops, spring 50 pushes the filter assembly via wear pad 90 back into its original position, which holds the filter material envelope 30 further toward the bottom 14 of fuel tank 10 by way of sliding against wear pad 90.

In the preferred embodiment, spring 50 is a continuous 1.5 mm stainless steel spring wire with wire ends soldered at joint 66. Top run 52 has an inner radius of 8.6 mm, positioning run 54 has a diameter of 3.9 mm and clearance run 56 has a length of approximately 20 mm from the center of the positioning run, and the clearance runs are spaced 10 mm apart. The top leg and base leg are spaced 29 mm apart vertically, and the side leg of spring 50 extends a horizontal distance of 55 mm. Inward run 64 extends horizontally approximately 16 mm, with a hairpin curve 65 of 3.5 mm radius. The preferred screen 32 is of nylon and has a 180 x 38 mesh, and is capable of removing impurities 60 microns or larger. Connector 70 and wear plate 90 are preferably made from molded plastic, such as acetal resin, though they may also be made from nylon. Top element 72 and bottom element 76 are preferably secured together and sealed around screen material 32 by sonic welding. Wear plate 90 is also secured to screen material 32 by sonic welding.

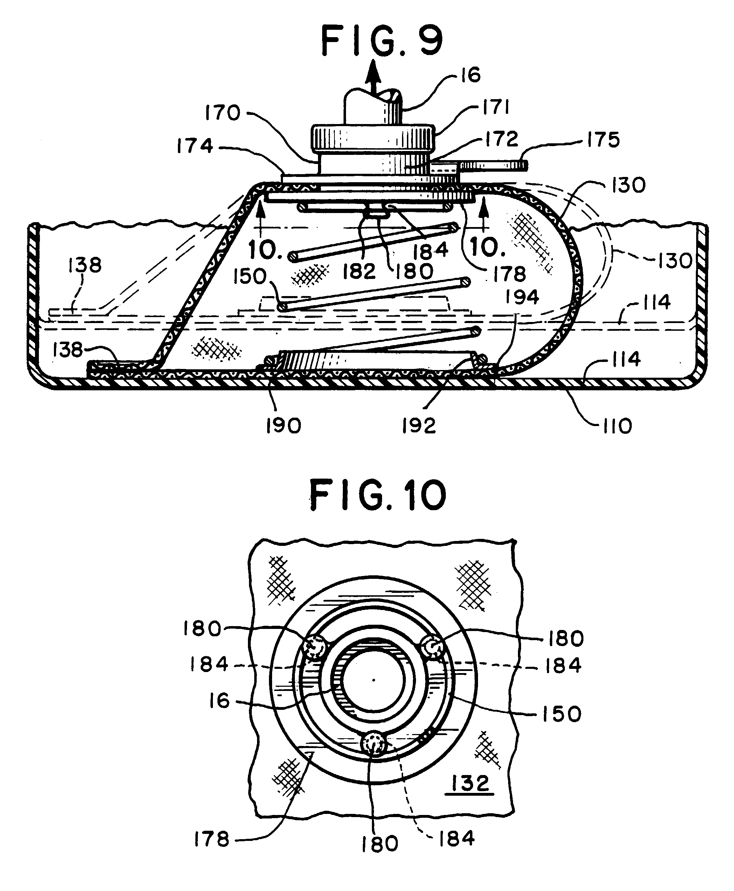

A filter 120 of a second embodiment of the invention is shown in FIGS. 9 and 10. The filter 120 is generally constructed similar to filter 20, and thus for the most part it has the same elements as filter 20 and therefore the elements of the two embodiments are numbered with the same last two digits.

There are, however, several differences. Spring 150 is a conical helical compression spring with the smaller end positioned and bearing against connector 170 on bottom shoulder 178 and the larger end positioned to interact with filter envelope 130. Connector 170 is of the same general configuration as connector 70 except that integral with bottom shoulder 178 are positioning plugs 180, spaced 120° apart, each provided with retaining ridges 182 defining channels 184 of sufficient depth to accommodate the diameter of one turn of spring 150, and thus retain the spring 150 to the connector 170.

Filter 120 is similarly constructed as filter 20, but wear pad 190 located in the interior of envelope 130 on screen material 132 is a circular configuration with L-shaped cross-section and having vertical leg 192 inside the diameter of the spring, thereby horizontally positioning spring 150, and horizontal leg 194, extending outwardly and under the last turn of spring 150, thereby providing a bearing surface for the free end of spring 150.

When the fuel tank bottom 114 alters its height, as depicted in phantom lines on FIG. 9, helical spring 150 collapses on itself so that filter 120 takes the shape shown in phantom in FIG. 9. Wear pad 190 again functions to prevent wear on filter material 132 which affects filtration efficiency or may jeopardize filter integrity. When tank bottom 114 drops, spring 150 pushes the filter assembly via wear pad 190 back into its original position, which holds the filter material envelope 130 further toward the bottom 114 by way of sliding against wear pad 190 horizontal leg 194.

In the preferred embodiment of this configuration, spring 150 is composed of 1.5 mm stainless steel spring wire with approximately 4.5 turns and a free length of approximately 29 mm and a top outside diameter of approximately 30 mm and a bottom outside diameter sufficient to enable each turn to collapse within a succeeding turn, which may be readily determined by those skilled in the art. The top and bottom ends of spring 150 are also preferably squared and ground. Wear pad 190 is preferably composed of the same plastic as connector 170 and is affixed to screen material 132 by sonic welding.

It should be appreciated that the apparatus of the present invention is capable of being incorporated in the form of a variety of embodiments, only a few of which have been illustrated and described above. The invention may be embodied in other forms without departing from its spirit or essential characteristics. For example, other spring materials may be used, including other cross-sectional shapes of spring steel, and other securing means between springs 50 or 150, and connectors 70 or 170, respectively, may be implemented including imbedding the spring into the bottom of the shoulder 78. The wear pad 192 may be segmented instead of a continuous circle. The described embodiments are to be considered in all respects only as illustrative and not restrictive and the scope of the invention is, therefore, indicated by the appended claims rather than by the foregoing description.

## Claims

1. A fuel tank filter (20, 120), having a connector (70, 170) which inside a fuel tank (10) is connected to the suction side of a fuel delivery system, wherein the filter (20, 120) is consisting of a filtration material (32) forming an envelope (30, 130) and being fixed to said connector (70, 170) and a spring member (50, 150) being effective between said connector (70, 170) and a lower part of the envelope (30, 130) to prevent substantial collapse of said envelope (30, 130) and to form a cavity for the filtered fuel, whereby the connector (70, 170) is connected to the inlet (16) of a fuel pump mounted inside the fuel tank (10), the spring member (50, 150) is a metal wire spring (50, 150) which is formed in a manner such that the lower part of said envelope (30, 130) is biased against the bottom (14, 114) of said fuel tank (10) to follow possible vertical movement of the bottom (14, 114), a wear pad (90, 190) is provided on the inside of said envelope (30, 130) slideably engaging the free end of said spring (50, 150) preventing contact between the spring (50, 150) and the filtration material (32), and said wear pad (90, 190) is affixed to the filtration material (32) to allow for relative movement between said free end of the spring (50, 150) and said wear pad (90, 190).

2. A fuel tank filter according to claim 1, characterized in that the connector (70, 170) is provided with positioning plugs (80, 180), and in that the spring (50, 150) is snap-fitted onto the positioning plugs (80, 180).

3. A fuel tank filter according to claim 1, characterized in that the filtration envelope (30, 130) is molded into the connector (70, 170), and in that a portion of the spring (50, 150) is embedded into the connector (70, 170).

4. A fuel tank filter according to any of the claims 1 to 3, characterized in that the spring (50) is consisting of stainless steel wire formed in a general double Z-shaped configuration with top legs (52, 54, 56), side legs (58, 60, 62) extending downwardly and outwardly therefrom and converging inwardly toward the bottom legs (64, 65), which converge inwardly and join at a curve (65) extending toward the inlet (16).

5. A fuel tank filter according to claim 4, characterized in that the top legs (52, 54, 56) are snap-fitted onto the positioning plugs (80) of the connector (70).

6. A fuel tank filter according to claim 4, characterized in that the top leg (52, 54, 56) of the Z-shaped spring (50) is embedded into the connector (70).

7. A fuel tank filter according to any of the preceding claims, characterized in that the wear pad (90) is crescent shaped.

8. A fuel tank filter according to any of the claims 1 to 3, characterized in that the spring (150) is consisting of stainless steel wire formed in a general conical helical configuration.

9. A fuel tank filter according to any of the preceding claims 1 to 6 or 8, characterized in that the wear pad (190) has a circular configuration, in that the wear pad (190) has a L-shaped cross-section, and in that the horizontal leg (194) of the L-shape is providing the bearing surface for the free end of the spring (50, 150).

10. A fuel tank filter according to claim 9, characterized in that the vertical leg (192) of the L-shape of the wear pad (190) is positioned inside of the spring (50, 150).

11. A fuel tank filter according to any of the preceding claims, characterized in that the connector (70, 170) is consisting of a top element (72) and a bottom element (76), and in that the filtration material (32) is sealed between adjacent shoulders (74, 78, 178) of the two elements (72, 76).

12. A fuel tank filter according to any of the preceding claims 2 ot 7 to 11, characterized in that the positioning plugs (80, 180) are integral with the connector (70, 170), in that the positioning plugs are provided with retaining ridges (82, 182), and in that the spring (50, 150) is snap-fitted onto the retaining ridges (82, 182) of the positioning plugs (80, 180).

13. A fuel tank filter according to any of the preceding claims 1 to 10 or 12, characterized in that the filtration envelope (30, 130) is molded into the connector (70, 170).

## Patentansprüche

1. Filter (20,120) für Kraftstoffbehälter mit einem Anschluß (70, 170) der innerhalb eines Kraftstofftanks (10) an die Saugseite eines Kraftstofffördersystems angeschlossen ist, wobei der Filter (20, 120) aus einem Filtermaterial (32) besteht, welches eine Hülle (30, 130) bildet, und welches an dem Anschluß (70, 170) befestigt ist, sowie einem Federteil (50, 150), welches zwischen dem Anschluß (70, 170) und einem unteren Teil der Hülle (30, 130) wirksam ist, um eine merkliches Zusammenfallen der Hülle (30, 130) zu verhindern, und um einen Hohlraum für den gefilterten Kraftstoff zu bilden, wobei der Anschluß (70, 170) mit dem Einlaß (16) einer Kraftstoffpumpe die innerhalb des Kraftstofftanks (10) montiert ist, verbunden ist, der Federteil (50, 150) aus einer Metalldrahtfeder (50, 150) besteht, welche derart geformt ist, daß der untere Teil der Hülle (30, 130) gegen den Boden (14, 114) des Kraftstofftanks (10) gedrückt wird, um möglichen Vertikalbewegungen des Bodens (14, 114) zu folgen, wobei ferner ein Verschleißpolster (90, 190) auf der Innenseite der Hülle (30, 130) vorgesehen ist, welches gleitbar mit dem freien Ende der Feder (50, 150) in Eingriff steht und eine Berührung zwischen der Feder (50, 150) und dem Filtermaterial (32) verhindert, und wobei das Verschleißpolster (90, 190) an dem Filtermaterial (32) befestigt ist, um eine Relativbewegung zwischen dem freien Ende der Feder (50, 150) und dem Verschleißpolster (90, 190) zuzulassen.

2. Filter für Kraftstoffbehälter nach Anspruch 1, **dadurch gekennzeichnet**, daß der Anschluß (70, 170) mit Positionierungszapfen (80, 180) versehen ist, und daß die Feder (50, 150) auf die Positionierungszapfen (80, 180) aufgeschnappt ist.

3. Filter für Kraftstoffbehälter nach Anspruch 1, **dadurch gekennzeichnet**, daß die Filterhülle (30, 130) in den Anschluß (70, 170) eingeformt ist und daß ein Teil der Feder (50, 150) in den Anschluß (70, 170) eingebettet ist.

4. Filter für Kraftstoffbehälter nach einem der Ansprüche 1 - 3, **dadurch gekennzeichnet**, daß die Feder (50) aus rostfreiem Stahldraht besteht, welcher in eine allgemein doppelt Z-förmige Gestalt geformt wurde, und obere Schenkel (52, 54, 56), von diesen sich nach unten und außen erstreckende seitliche Schenkel (58, 60, 62) aufweist, welche sich nach innen in Richtung der Bodenschenkel (64, 65) erstrecken, die wiederum nach innen verlaufen und an eine Kurve (65) miteinander verbunden sind,die sich in Richtung des Einlasses (16) erstreckt.

5. Filter für Kraftstoffbehälter nach Anspruch 4, **dadurch gekennzeichnet,** daß die oberen Schenkel (52, 54, 56) auf die Positionierungszapfen (80) des Anschlusses (70) aufgeschnappt sind.

6. Filter für Kraftstoffbehälter nach Anspruch 4, **dadurch gekennzeichnet**, daß die oberen Schenkel (52, 54, 56) der Z-förmigen Feder (50) in dem Anschluß (70) eingebettet sind.

7. Filter für Kraftstoffbehälter nach einem der vorstehenden Ansprüche, **dadurch gekennzeichnet,** daß das Verschleißpolster (90) halbmondförmig ist.

8. Filter für Kraftstoffbehälter nach einem der Ansprüche 1 - 3, **dadurch gekennzeichnet,** daß die Feder (150) aus rostfreiem Stahldraht besteht, welcher in eine allgemein konischschraubenlinienförmige Gestalt geformt wurde.

9. Filter für Kraftstoffbehälter nach einem der vorstehenden Ansprüche 1 - 6 oder 8, **dadurch gekennzeichnet**, daß das Verschleißpolster (190) eine kreisförmige Gestalt aufweist, daß das Verschleißpolster (190) einen L-förmigen Querschnitt aufweist, und daß der waagerechte Schenkel (194) der L-Form die Tragfläche für das freie Ende der Feder (50, 150) bildet.

10. Filter für Kraftstoffbehälter nach Anspruch 9, **dadurch gekennzeichnet,** daß der senkrechte Schenkel (192) der L-Form des Verschleißpolster (190) innerhalb der Feder (50, 150) angeordnet ist.

11. Filter für Kraftstoffbehälter nach einem der vorstehenden Ansprüche, **dadurch gekennzeichnet**, daß der Anschluß (70, 170) aus einem Oberelement (72) und einem Unterelement (76) besteht, und daß das Filtermaterial (32) zwischen benachbarten Schultern (74, 78, 178) der beiden Elemente (72 und 76) dichtend angeordnet ist.

12. Filter für Kraftstoffbehälter nach einem der vorstehenden Ansprüche 2 oder 7 - 11, **dadurch gekennzeichnet**, daß die Positionierungszapfen (80, 180) einstückig mit dem Anschluß (70, 170) ausgebildet sind, daß die Positionierungszapfen mit Halteleisten (82, 182) versehen sind, und daß die Feder (50, 150) auf die Halteleisten (82, 182) der Positionierungszapfen (80, 180) aufgeschnappt ist.

13. Filter für Kraftstoffbehälter nach einem der vorstehenden Ansprüche 1 - 10 oder 12, **dadurch gekennzeichnet,** daß die Filterhülle (30, 130) in den Anschluß (70, 170) eingeformt ist.

## Revendications

1. Un filtre (20, 120) pour réservoir à carburant, comportant un connecteur (70, 170) connecté à l'intérieur d'un réservoir à carburant (10), au côté aspiration d'un système d'alimentation en carburant, dans lequel le filtre (20, 120) est constitué d'un matériau filtrant (32), formant une enveloppe (30, 130) et fixé audit connecteur (70, 170), et d'un organe élastique (50, 150) agissant entre ledit connecteur (70, 170) et une partie inférieure de l'enveloppe (30, 130) pour empêcher toute rétraction notable de ladite enveloppe (30,130) et pour former une cavité destinée au carburant ayant été filtré, de manière que le connecteur (70, 170) soit connecté à l'entrée (16) d'une pompe à carburant montée à l'intérieur du réservoir à carburant (10), l'organe élastique (50, 150) étant constitué par un ressort (50, 150) en fil métallique, formé d'une manière faisant que la partie intérieure de ladite enveloppe (30, 130) est déplacée contre le fond (14, 114) dudit réservoir à carburant (10) pour suivre le déplacement vertical éventuel du fond (14, 114), une garniture de portée (90, 190) prévue de ladite enveloppe (30, 130) venant en contact de glissement avec l'extrémité libre dudit ressort (50, 150), empêchant tout contact entre le ressort (50, 150) et le matériau de filtration et ladite garniture de portée (90, 190) étant fixée au matériau filtrant (32) pour permettre un déplacement relatif entre ladite extrémité libre du ressort isù, 150) et ladite garniture de portée (90, 190).

2. Un filtre à réservoir à carburant selon la revendication 1, caractérisé en ce que le connecteur (70, 170) est pourvu de tétons de positionnement (80, 180) et en ce que le ressort (50, 150) est monté par encliquetage sur les tétons de positionnement (80, 180).

3. Un filtre pour réservoir à carburant selon la revendication 1, caractérisé en ce que l' enveloppe de filtration (30, 130) est moulée dans le connecteur (70, 170), et en ce qu'une partie du ressort (50, 150) est noyée dans le connecteur (70, 170).

4. Un filtre pour réservoir à carburant selon l'une quelconque des revendications 1 à 3, caractérisé en ce que le ressort (50) est constitué d'un fil en acier inoxydable, formé en une configuration globale en double Z, avec des pattes supérieures (52, 54, 56), des pattes latérales (58, 60, 62), s'étendant vers le bas et vers l'extérieur depuis celui-ci et convergeant vers l'intérieur en direction des pattes inférieures (64, 65), convergeant vers l'intérieur et se réunissant en donnant une courbe (65) s'étendant vers l'entrée (16).

5. Un filtre pour réservoir à carburant selon la revendication 4, caractérisé en ce que les pattes supérieures (52, 54, 56) sont montées par encliquetage sur les tétons de positionnement (80) connecteur (70).

6. Un filtre pour réservoir à carburant selon la revendication 4, caractérisé en ce que la patte supérieure (52, 54, 56) du ressort (50) en forme de Z est noyée dans le connecteur (70).

7. Un filtre pour réservoir à carburant selon l'une quelconque des revendications précédentes, caractérisé en ce que la garniture de portée (90) est en forme de croissant.

8. Un filtre pour réservoir à carburant selon l'une quelconque des revendications 1 à 3, caractérisé en ce que le ressort (150) est constitué d'un fil en acier inoxydable formé en une configuration hélicoïdale globalement conique.

9. Un filtre pour réservoir à carburant selon l'une quelconque des 1 à 6 ou 8 précédentes, caractérisé en ce que la garniture de portée (190) a une configuration circulaire, en ce que la garniture de portée (190) a une section transversale en forme de L, et en ce que la patte horizontale (194) de la forme en L constitue la surface de portée destinée à l'extrémité libre du ressort (50, 150).

10. Un filtre pour réservoir à carburant selon la revendication 4, caractérisé en ce que la patte verticale (192) de la forme en L de la garniture de portée (190) est positionnée à l'intérieur du ressort (50, 150).

11. Un filtre pour réservoir à carburant selon l'une quelconque des revendications précédentes, caractérisé en ce que le connecteur (70, 170) est constitué d'un élément supérieur (72) et d'un élément intérieur (76), et en ce que le matériau de filtration (32) est scellé entre des épaulements (74, 78, 178) adjacents des deux éléments (72, 76).

12. Un filtre pour réservoir à carburant selon l'une quelconque des revendications 2 ou 7 à 11 précédentes, caractérisé en ce que les tétons de positionnement (80, 180) sont réalisés d'une seule pièce avec le connecteur (70, 170), en ce que les tétons de positionnement sont pourvus de nervures de retenue (82, 182), et en ce que le ressort (50, 150) est monté par encliquetage sur les nervures de retenue (82, 182) des tétons de positionnement (80, 180).

13. Un filtre pour réservoir à carburant selon l'une quelconque des revendications 1 à 10 ou 12 précédentes, caractérisé en ce que l'enveloppe de filtration (30, 130) est moulée dans le connecteur (70, 170).
